# EUROPEAN PATENT APPLICATION

(11) **EP 4 550 804 A1**
(43) Date of publication of application: **07.05.2025**
(21) Application number: 24842430.1
(22) Date of filing: 18.07.2024
(51) Int. Cl.: H04N 21/43, H04N 7/15, H04N 19/172, H04N 19/187

(54) **BULK ENDPOINT-BASED WIRELESS AUXILIARY STREAM DATA TRANSMISSION METHOD, AND DEVICE**

(30) Priority: 20.07.2023 CN 202310891851
(71) Applicant: Yealink (Xiamen) Network Technology Co., Ltd., Xiamen City, Fujian 361009 (CN)
(72) Inventor: JIANG, Hu, Xiamen, Fujian 361009 (CN)
(74) Representative: Meyer, Thorsten
(86) International application number: PCT/CN2024/106276
(87) International publication number: WO 2025/016443

(57) **Abstract**

Provided are a method and device for transmitting wireless auxiliary stream data based on a bulk endpoint, which are applied to a wireless auxiliary stream device. First encoded data sent by a first terminal is received through a bulk endpoint based on a preset first network protocol, and the first encoded data is sent to a second terminal through a wireless network, whereby the second terminal obtains and displays first multimedia data based on the first encoded data. The present disclosure uses a higher bandwidth to receive data through the bulk endpoint, making data transmission safer and more reliable. In addition, the first encoded data is received based on the first network protocol, and is directly sent without being processed, which improves efficiency and scalability of the data transmission, and makes it convenient for users to use a plurality of universal network protocols and tools in a transmission process.

## Description

### CROSS-REFERENCE TO RELATED APPLICATIONS

The present application claims the benefit of Chinese Patent Application No. 202310891851.9 filed on July 20, 2023, the contents of which are hereby incorporated by reference.

### TECHNICAL FIELD

The present disclosure relates to the technical field of communications, and in particular, to a method and device for transmitting wireless auxiliary stream data based on a bulk endpoint.

### BACKGROUND

With the development of Internet technologies, video live streaming is widely used in online videoconferencing, live games, online classes, and other scenarios in an innovative presentation format.

In the prior art, when the wireless auxiliary stream technology is used to transmit data to a screen projection device, a personal computer (PC) often uses a custom network protocol stack to package the data to obtain a corresponding data packet. A wireless auxiliary stream end receives the data packet through an INT endpoint, parses the data based on a custom protocol, and then performs NAT conversion on the data packet through a virtual network card. A converted data packet is sent to a host for display.

However, when the INT endpoint is used for transmission, there is a risk of packet loss, and a bandwidth is low. The use of the virtual network card for the NAT conversion also consumes a large number of computational resources, resulting in low data transmission efficiency.

### SUMMARY

The present disclosure provides a method and device for transmitting wireless auxiliary stream data based on a bulk endpoint, to achieve a technical effect of ensuring transmission security of wireless auxiliary stream data while improving transmission efficiency of the wireless auxiliary stream data.

In order to solve the above technical problems, an embodiment of the present disclosure provides a method for transmitting wireless auxiliary stream data based on a bulk endpoint, which is applied to a wireless auxiliary stream device. The method for transmitting wireless auxiliary stream data includes the following steps:
receiving, through a bulk endpoint based on a preset first network protocol, first encoded data sent by a first terminal, where the first encoded data is obtained by encoding to-be-processed multimedia data by the first terminal; and
sending the first encoded data to a second terminal through a wireless network, whereby the second terminal obtains and displays first multimedia data based on the first encoded data.

The data transmission method provided in the present disclosure receives data through the bulk endpoint, and uses a higher bandwidth compared with the prior art in which data is received through an INT endpoint, making data transmission safer and more reliable. In addition, the present disclosure receives the first encoded data based on the preset first network protocol, thereby improving scalability of the data transmission. In addition, the present disclosure can directly send the first encoded data to the second terminal without performing more operations on the first encoded data, thereby improving data transmission efficiency and making it convenient for a user to use a plurality of universal network protocols and tools in a transmission process.

As a preferred example, the sending the first encoded data to a second terminal through a wireless network specifically includes:
sending the first encoded data to a wireless network card, whereby the wireless network card sends the first encoded data to the second terminal through the wireless network, where
the wireless auxiliary stream device includes the wireless network card.

After receiving the first encoded data, the wireless auxiliary stream device in the present disclosure sends the first encoded data to the wireless network card of the device, whereby the wireless network card sends the first encoded data to the second terminal through the wireless network. Compared with the prior art in which a virtual network card is required to perform NAT conversion on received encoded data before the wireless network card sends the received encoded data, the present disclosure can directly transmit the received first encoded data to the wireless network card for sending. This omits the NAT conversion step of the virtual network card and further improves the data transmission efficiency.

As a preferred example, the first encoded data is obtained by encoding the to-be-processed multimedia data by the first terminal specifically includes:
encoding, by the first terminal, the collected to-be-processed multimedia data based on a preset first interface to obtain the first encoded data, and calling the first network protocol to send the first encoded data to the wireless auxiliary stream device through the bulk endpoint, whereby the wireless auxiliary stream device receives the first encoded data.

In order to cooperate with that the wireless auxiliary stream device receives data using the first network protocol, the first terminal in the present disclosure also sends the first encoded data based on the first network protocol. Compared with the prior art in which the encoded data needs to be packaged into a data packet for transmission, the transmission method in the present disclosure does not need to package the data but transmits the data in a form of the data packet. This omits a step of generating the data packet and improves the data transmission efficiency.

Similarly, since both the first terminal and the wireless auxiliary stream device transmit the data based on the first network protocol, the wireless auxiliary stream device does not need to unpack or decode the first encoded data after receiving the first encoded data, and can directly send the first encoded data to the second terminal, thereby further improving the data transmission efficiency.

As a preferred example, before the receiving, through a bulk endpoint based on a preset first network protocol, first encoded data sent by a first terminal, the method for transmitting wireless auxiliary stream data based on a bulk endpoint further includes:
receiving, through the bulk endpoint based on the first network protocol, first debugging data sent by the first terminal, and performing a debugging operation based on the first debugging data, where
the first debugging data is obtained through parsing performed by the first terminal based on a first debugging signal.

In order to ensure stability of the data transmission, the present disclosure also adds a debugging process for the wireless auxiliary stream device before transmitting the first encoded data. The first debugging data sent from the first terminal is received through the bulk endpoint based on the first network protocol, and the wireless auxiliary stream device is debugged based on the first debugging data. Due to scalability of the first network protocol, debugging efficiency of the present disclosure has also been improved compared with the prior art, and the wireless auxiliary stream device can also receive different types of debugging data for debugging.

As a preferred example, the first debugging data is obtained through the parsing performed by the first terminal based on a first debugging signal specifically includes:
responding to, by the first terminal, the first debugging signal, parsing the first debugging signal to obtain the first debugging data, and sending the first debugging data to the wireless auxiliary stream device through the bulk endpoint based on the first network protocol, whereby the wireless auxiliary stream device receives the first debugging data.

The above debugging data parsing process ensures that the wireless auxiliary stream device subsequently performs the debugging operation based on the first debugging data obtained through the parsing, and improves stability and security of the device during subsequent transmission of the first encoded data.

Correspondingly, the present disclosure further provides a wireless auxiliary stream device. The wireless auxiliary stream device includes a receiving module and a sending module, where
the receiving module is configured to receive, through a bulk endpoint based on a preset first network protocol, first encoded data sent by a first terminal, where the first encoded data is obtained by encoding to-be-processed multimedia data by the first terminal; and
the sending module is configured to send the first encoded data to a second terminal through a wireless network, whereby the second terminal obtains and displays first multimedia data based on the first encoded data.

As a preferred example, the sending module is specifically configured to:
send the first encoded data to a wireless network card, whereby the wireless network card sends the first encoded data to the second terminal through the wireless network, where
the wireless auxiliary stream device includes the wireless network card.

As a preferred example, the first encoded data received by the receiving module is obtained by encoding the to-be-processed multimedia data by the first terminal specifically includes:
encoding the collected to-be-processed multimedia data based on a preset first interface of the first terminal to obtain the first encoded data, and calling the first network protocol to send the first encoded data to the wireless auxiliary stream device through the bulk endpoint, whereby the wireless auxiliary stream device receives the first encoded data.

As a preferred example, the receiving module is further configured to:
receive, through the bulk endpoint based on the first network protocol, first debugging data sent by the first terminal, and perform a debugging operation based on the first debugging data, where
the first debugging data is obtained through parsing performed by the first terminal based on a first debugging signal.

Correspondingly, the present disclosure further provides a wireless auxiliary stream system. The wireless auxiliary stream system includes a first terminal, a second terminal, and a wireless auxiliary stream device.

The first terminal is connected to the wireless auxiliary stream device through a bulk endpoint, and the second terminal is connected to the wireless auxiliary stream device through a wireless network.

The wireless auxiliary stream device executes the method for transmitting wireless auxiliary stream data based on a bulk endpoint described above.

The first terminal is configured to send first encoded data to the wireless auxiliary stream device.

The second terminal is configured to obtain and display first multimedia data based on the first encoded data.

### BRIEF DESCRIPTION OF THE DRAWINGS

FIG. 1 is a schematic flowchart of a method for transmitting wireless auxiliary stream data based on a bulk endpoint according to an embodiment of the present disclosure;
FIG. 2 is a schematic flowchart of a method for debugging a wireless auxiliary stream device based on a bulk endpoint according to an embodiment of the present disclosure;
FIG. 3 is a schematic flowchart of a method for transmitting wireless auxiliary stream data based on a bulk endpoint according to another embodiment of the present disclosure; and
FIG. 4 is a schematic structural diagram of a device for transmitting wireless auxiliary stream data based on a bulk endpoint according to an embodiment of the present disclosure.

### DETAILED DESCRIPTION

The technical solutions in the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

### Embodiment 1

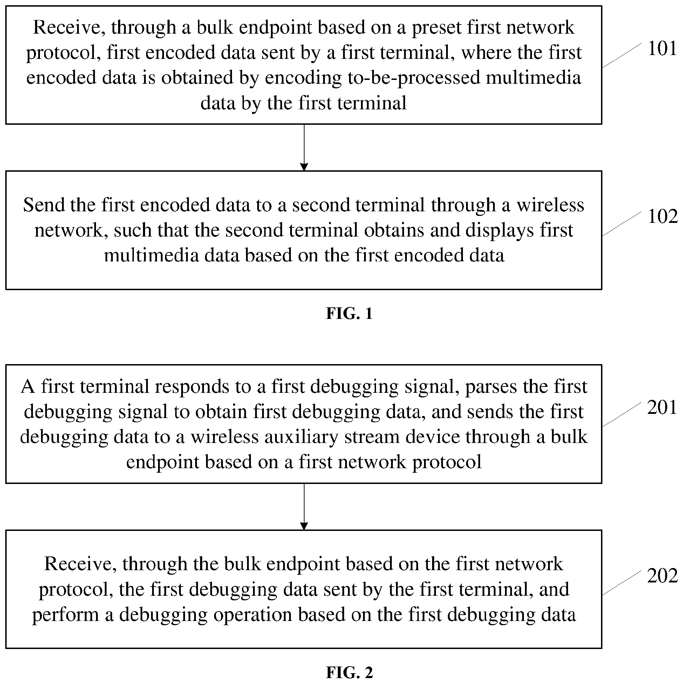

FIG. 1 is a schematic flowchart of a method for transmitting wireless auxiliary stream data based on a bulk endpoint according to an embodiment of the present disclosure. The method for transmitting wireless auxiliary stream data based on a bulk endpoint includes steps 101 and 102, which are specifically described as follows:
Step 101: Receive, through a bulk endpoint based on a preset first network protocol, first encoded data sent by a first terminal.

In this embodiment, a wireless auxiliary stream device receives data through the bulk endpoint, which is more stable compared with the prior art in which data is received through an INT endpoint. In addition, a higher bandwidth is used, making data transmission safer and more reliable. In addition, the present disclosure implants a network protocol stack in the device and uses the first network protocol to receive the first encoded data. In this way, scalability of the data transmission is improved, and it is not required to perform any processing on the data when the data is received.

The first network protocol in this embodiment is a universal network protocol, and includes but is not limited to the TCP/ and IP, the IPX/SPX protocol, the NetBEUI protocol, and the like. However, the first network protocol in this embodiment is preferably the TCP/IP, because the TCP/IP is a reliable transmission protocol and has a retransmission mechanism. Reliability of the protocol itself can be relied on to improve packet loss resistance of the data transmission, thereby enhancing user experience.

As a most basic protocol of the Internet, the TCP/IP is a protocol family including a plurality of protocols. Strictly speaking, the protocol family is a four-layer architecture including an application layer, a transport layer, a network layer, and a data link layer. Main protocols of the TCP/IP application layer are the Telnet, the FTP, the SMTP, and the like, which are used to receive data from the transport layer or transmit data to the transport layer according to different application requirements and methods. Main protocols of the transport layer are the UDP and the TCP, which are channels for a user to combine data within a platform and a computer information network, thereby achieving data transmission and sharing. Main protocols of the network layer are the ICMP, the IP, and the IGMP, which are mainly responsible for transmitting data packets in the network. Main protocols of the network access layer, also known as the network interface layer or the data link layer, are the ARP and the RARP, which are mainly used to detect a link management error and effectively handle information detail problems related to different communication media.

Step 102: Send the first encoded data to a second terminal through a wireless network, whereby the second terminal obtains and displays first multimedia data based on the first encoded data.

In this embodiment, after receiving the first encoded data, the wireless auxiliary stream device can directly send the first encoded data to the second terminal without performing more operations such as parsing or decoding on the first encoded data. This omits a data packaging or conversion step compared with the prior at, thereby improving data transmission efficiency, and also making it convenient for the user to use a plurality of universal network protocols and tools in a transmission process.

In this embodiment, since a same type of network data is transmitted between the first terminal, the wireless auxiliary stream device, and the second terminal, the first terminal, the wireless auxiliary stream device, and the second terminal do not need to perform any processing on the network data when the network data is transmitted between them. After receiving the first encoded data sent by the first terminal, the wireless auxiliary stream device can directly send the first encoded data to the second terminal.

In addition, in this embodiment, the network data transmitted between the first terminal, the wireless auxiliary stream device, and the second terminal is not limited to simple image data or video data. The network data may be multimedia data such as video data, audio data, image data, and text data. If the transmitted network data is the video data or the audio data, a corresponding transmission process is the same as the transmission process provided in this embodiment. That is, the first terminal encodes the to-be-processed data to obtain corresponding first encoded data, and sends the first encoded data to the wireless auxiliary stream device based on the first network protocol. The wireless auxiliary stream device receives the first encoded data through the bulk endpoint based on the first network protocol, and sends the first encoded data to the second terminal through the wireless network. In this way, the second terminal decodes the first encoded data and obtains the corresponding transmitted network data, including the multimedia data such as the audio data, the video data, the image data, or the text data.

Before sending the first encoded data to the second terminal, the wireless auxiliary stream device sends the first encoded data to a wireless network card, whereby the wireless network card sends the first encoded data to the second terminal through the wireless network. The wireless auxiliary stream device includes the wireless network card. Compared with the prior art in which a virtual network card is required to perform NAT conversion on received encoded data before the wireless network card sends the received encoded data, the present disclosure can directly transmit the received first encoded data to the wireless network card for sending. This omits the NAT conversion step of the virtual network card and further improves the data transmission efficiency.

As another example of this embodiment, FIG. 2 is a schematic flowchart of a method for debugging a wireless auxiliary stream device based on a bulk endpoint according to an embodiment of the present disclosure. The method for debugging a wireless auxiliary stream device based on a bulk endpoint includes steps 201 and 202, which are specifically described as follows:
Step 201: The first terminal responds to a first debugging signal, parses the first debugging signal to obtain first debugging data, and sends the first debugging data to the wireless auxiliary stream device through the bulk endpoint based on the first network protocol.

In this example, the above debugging data parsing process ensures accuracy of a debugging operation subsequently performed by the wireless auxiliary stream device based on the first debugging data obtained through the parsing, and improves stability and security of the wireless auxiliary stream device when the wireless auxiliary stream device transmits the first encoded data after being debugged. In addition, when the wireless auxiliary stream device is debugged, a firewall system, an intrusion detection system, and an access policy system of the device are adjusted further to improve data security during data transmission by the device.

Step 202: Receive, through the bulk endpoint based on the first network protocol, the first debugging data sent by the first terminal, and perform the debugging operation based on the first debugging data.

The debugging process provided in this example may be executed before or after the data transmission. In order to ensure stability of a subsequent data transmission process, the debugging process is executed before the data transmission. In order to perform debugging to solve a problem that arises during the data transmission, the debugging process is executed after the data transmission. The first debugging data sent by the first terminal is received through the bulk endpoint based on the first network protocol, and the wireless auxiliary stream device is debugged based on the first debugging data. In addition, due to scalability of the first network protocol, debugging efficiency of the present disclosure has also been improved compared with the prior art, and the wireless auxiliary stream device can also receive different types of debugging data for debugging.

For the above debugging process, the first terminal includes a debugging client, and the wireless auxiliary stream device includes a debugging server. Based on the above two modules, the above debugging process is specifically implemented as follows: The debugging client in the first terminal responds to the first debugging signal, determines, based on the first debugging data obtained by parsing the first debugging signal, a first debugging program that needs to be run, and runs the first debugging program, whereby the first terminal sends the first debugging data based on the first network protocol, and then the wireless auxiliary stream device receives the first debugging data. After receiving the first debugging data based on the first network protocol, the wireless auxiliary stream device sends the first debugging data to the debugging server, whereby the debugging server determines a type of the first debugging program based on the first debugging data, and runs the first debugging program to perform the debugging operation based on the first debugging data.

This embodiment does not further limit a specific type of the debugging program, and the user can adjust the program type based on an actual situation. The type of the debugging program includes a SecureCRT program, a super terminal program, or the like.

### Embodiment 2

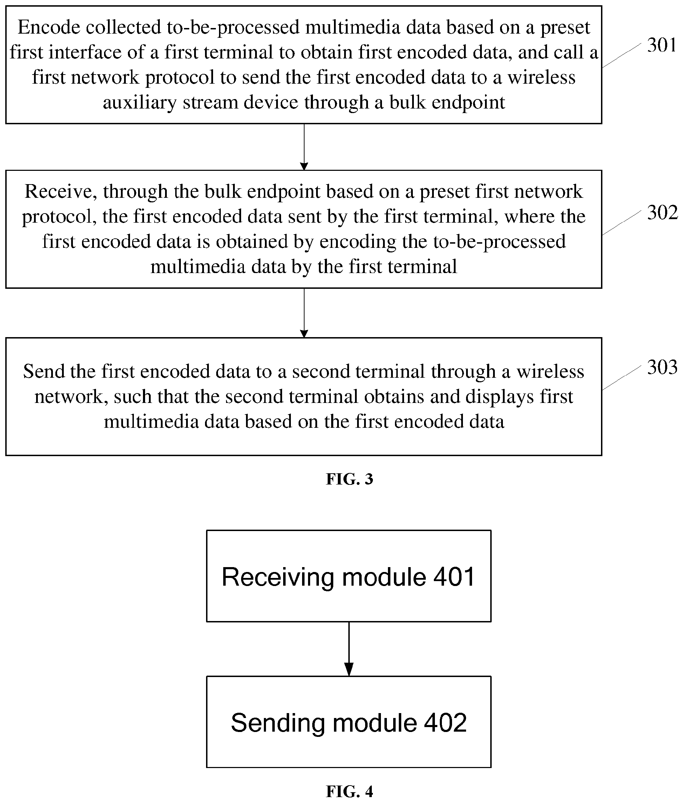

FIG. 3 is a schematic flowchart of a method for transmitting wireless auxiliary stream data based on a bulk endpoint according to another embodiment of the present disclosure. As shown in FIG. 3, compared with FIG. 1, steps 302 and 303 in FIG. 3 are the same as the steps 101 and 102 in FIG. 1. In step 301, collected to-be-processed multimedia data is encoded based on a preset first interface of a first terminal to obtain first encoded data, and a first network protocol is called to send the first encoded data to a wireless auxiliary stream device through a bulk endpoint.

In this embodiment, in order to cooperate with that the wireless auxiliary stream device receives data using the first network protocol, the first terminal also sends the first encoded data based on the first network protocol. Compared with the prior art in which the encoded data needs to be packaged into a data packet for transmission, the transmission method in this embodiment does not need to package the data but transmits the data in a form of the data packet. This omits a step of generating the data packet and improves data transmission efficiency.

Similarly, since both the first terminal and the wireless auxiliary stream device transmit the data based on the first network protocol, the wireless auxiliary stream device does not need to unpack or decode the first encoded data after receiving the first encoded data, and can directly send the first encoded data to a second terminal, thereby further improving the data transmission efficiency.

Due to good scalability of the first network protocol used by the first terminal, it is convenient for a user to use various universal network protocols and corresponding tools for the first terminal based on actual needs. Similarly, the first interface in this embodiment is preferably a standard socket interface. Based on the standard socket interface, it is more convenient for the user to perform programming or development for the first terminal.

The standard socket interface is a basic operation unit for communication supporting the TCP/IP, and can serve as an endpoint in a communication connection between two network applications. It is an application programming interface (API) for inter-process communication in a network environment. During operation, the first interface, namely the standard socket interface, of the first terminal is in a to-be-connected state and monitors a network status of the first terminal in real time. When detecting a connection request, the first interface, namely the standard socket interface, adjusts the network status of the first terminal to a connected state and responds to the connection request. After a connection is successfully established, based on the first interface, namely the standard socket interface, the first terminal can receive an encoding code to encode the to-be-processed multimedia data, or receive a programming code to enable the first terminal to run a corresponding command based on the programming code, or receive a development code to enable the first terminal to run a corresponding command based on the development code.

In order to better illustrate working principles and steps processes of the method and device for transmitting wireless auxiliary stream data based on a bulk endpoint in the present disclosure, reference may be made to but not limited to the relevant descriptions above.

Correspondingly, FIG. 4 is a schematic structural diagram of a device for transmitting wireless auxiliary stream data based on a bulk endpoint according to an embodiment of the present disclosure. As shown in FIG. 4, the wireless auxiliary stream device includes a receiving module 401 and a sending module 402.

The receiving module 401 is configured to receive, through a bulk endpoint based on a preset first network protocol, first encoded data sent by a first terminal, and can be further configured to receive, through the bulk endpoint based on the first network protocol, first debugging data sent by the first terminal, and perform a debugging operation based on the first debugging data. The first encoded data is obtained by encoding to-be-processed multimedia data by the first terminal. The first debugging data is obtained through parsing performed by the first terminal based on a first debugging signal.

The sending module 402 is configured to send the first encoded data to a second terminal through a wireless network, whereby the second terminal obtains and displays first multimedia data based on the first encoded data. That the first encoded data is sent to the second terminal through the wireless network is specifically as follows: The first encoded data is sent to a wireless network card, whereby the wireless network card sends the first encoded data to the second terminal through the wireless network. A wireless auxiliary stream device includes the wireless network card.

Compared with a wireless auxiliary stream device in the prior art, the wireless auxiliary stream device structurally does not include a virtual network card, and therefore does not need to perform NAT conversion. Therefore, the wireless auxiliary stream device provided in this embodiment has a simpler structure, a simpler installation process, and omits a data processing step, thereby improving data transmission efficiency.

Correspondingly, the embodiments of the present disclosure further provide a wireless auxiliary stream system. The wireless auxiliary stream system includes a first terminal, a second terminal, and a wireless auxiliary stream device. The first terminal is connected to the wireless auxiliary stream device through a bulk endpoint, and the second terminal is connected to the wireless auxiliary stream device through a wireless network.

The first terminal is configured to send first encoded data to the wireless auxiliary stream device. Specifically, the first terminal encodes collected to-be-processed multimedia data based on a preset first interface to obtain first encoded data, calls a first network protocol to send the first encoded data to the wireless auxiliary stream device through a bulk endpoint whereby the wireless auxiliary stream device receives the first encoded data and responds to a first debugging signal, parses the first debugging signal to obtain first debugging data, and sends the first debugging data to the wireless auxiliary stream device through the bulk endpoint based on the first network protocol, whereby the wireless auxiliary stream device receives the first debugging data.

The second terminal is configured to obtain and display first multimedia data based on the first encoded data. Specifically, the second terminal receives the first encoded data through the wireless network and decodes the first encoded data to obtain the first multimedia data, and displays the first multimedia data on a display terminal.

When the first terminal is a screen projection device, the second terminal is a host. When the first terminal is a host, the second terminal is a screen projection device. There may be one or more screen projection devices. When the first terminal is the screen projection device and the second terminal is the host, the wireless auxiliary stream device executes the operation process from the step 101 to the step 102 in Embodiment 1.

When the first terminal is the host and the second terminal is the screen projection device, an operation process executed by the wireless auxiliary stream device is similar to, but different from, the step 101 to the step 102 in Embodiment 1. The difference is that the wireless auxiliary stream device will receive, through the wireless network, second data sent by the first terminal, and send the second data to the second terminal through the bulk endpoint based on the preset first network protocol, whereby the second terminal receives the second data. The above process is reverse screen projection, which means that data from the host is reversely projected to the screen projection device.

When the wireless auxiliary stream device performs the reverse screen projecting operation, the first terminal, namely the host, encodes second to-be-processed multimedia data to obtain the second data, and sends the second data to the wireless auxiliary stream device through the wireless network, whereby the wireless auxiliary stream device receives the second data from the first terminal, namely the host, through a wireless network card. After receiving the second data, the wireless auxiliary stream device does not need to perform any operation on the second data, and can directly send the second data to the second terminal, namely the screen projection device, through the bulk endpoint based on the preset first network protocol. In this way, the second terminal, namely the screen projection device, receives the second data based on the first network protocol, and decodes the second data to obtain and display the second multimedia data.

When executing the reverse screen projecting process, the wireless auxiliary stream device can also receive, through the wireless network, second debugging data sent by the first terminal, namely the host, and perform a debugging operation based on the second debugging data. The second debugging data is obtained through parsing performed by the first terminal, namely the host, based on a second debugging signal. The first terminal, namely the host, responds to the second debugging signal, parses the second debugging signal to obtain the second debugging data, and sends the second debugging data to the wireless auxiliary stream device through the wireless network, whereby the wireless auxiliary stream device performs the debugging operation based on the second debugging data.

In conclusion, the present disclosure provides a method and device for transmitting wireless auxiliary stream data based on a bulk endpoint, which are applied to a wireless auxiliary stream device. First encoded data sent by a first terminal is received through a bulk endpoint based on a preset first network protocol, and the first encoded data is sent to a second terminal through a wireless network, whereby the second terminal obtains and displays first multimedia data based on the first encoded data. The present disclosure uses a higher bandwidth to receive data through the bulk endpoint, making data transmission safer and more reliable. In addition, the first encoded data is received based on the first network protocol, and is directly sent without being processed, which improves efficiency and scalability of the data transmission, and makes it convenient for a user to use a plurality of universal network protocols and tools in a transmission process.

The objectives, technical solutions, and beneficial effects of the present disclosure are further described in detail through the above specific embodiments. It should be understood that the above are merely some specific embodiments of the present disclosure, but are not intended to limit the protection scope of the present disclosure. It should be particularly noted that, any modifications, equivalent substitutions, improvements, and the like made by those skilled in the art within the spirit and principle of the present disclosure should be included within the protection scope of the present disclosure.

## Claims

1. A method for transmitting wireless auxiliary stream data based on a bulk endpoint, applied to a wireless auxiliary stream device, wherein the method for transmitting wireless auxiliary stream data comprises the following steps:
receiving, through a bulk endpoint based on a preset first network protocol, first encoded data sent by a first terminal, wherein the first encoded data is obtained by encoding to-be-processed multimedia data by the first terminal; and
sending the first encoded data to a second terminal through a wireless network, whereby the second terminal obtains and displays first multimedia data based on the first encoded data.

2. The method for transmitting wireless auxiliary stream data based on a bulk endpoint according to claim 1, wherein the sending the first encoded data to a second terminal through a wireless network specifically comprises:
sending the first encoded data to a wireless network card, whereby the wireless network card sends the first encoded data to the second terminal through the wireless network, wherein
the wireless auxiliary stream device comprises the wireless network card.

3. The method for transmitting wireless auxiliary stream data based on a bulk endpoint according to claim 1, wherein the first encoded data is obtained by encoding the to-be-processed multimedia data by the first terminal specifically comprises:
encoding, by the first terminal, the collected to-be-processed multimedia data based on a preset first interface to obtain the first encoded data, and calling the first network protocol to send the first encoded data to the wireless auxiliary stream device through the bulk endpoint, whereby the wireless auxiliary stream device receives the first encoded data.

4. The method for transmitting wireless auxiliary stream data based on a bulk endpoint according to claim 1, wherein before the receiving, through a bulk endpoint based on a preset first network protocol, first encoded data sent by a first terminal, the method further comprises:
receiving, through the bulk endpoint based on the first network protocol, first debugging data sent by the first terminal, and performing a debugging operation based on the first debugging data, wherein
the first debugging data is obtained through parsing performed by the first terminal based on a first debugging signal.

5. The method for transmitting wireless auxiliary stream data based on a bulk endpoint according to claim 4, wherein the first debugging data is obtained through the parsing performed by the first terminal based on the first debugging signal specifically comprises:
responding to, by the first terminal, the first debugging signal, parsing the first debugging signal to obtain the first debugging data, and sending the first debugging data to the wireless auxiliary stream device through the bulk endpoint based on the first network protocol, whereby the wireless auxiliary stream device receives the first debugging data.

6. A wireless auxiliary stream device, comprising a receiving module and a sending module, wherein
the receiving module is configured to receive, through a bulk endpoint based on a preset first network protocol, first encoded data sent by a first terminal, wherein the first encoded data is obtained by encoding to-be-processed multimedia data by the first terminal; and
the sending module is configured to send the first encoded data to a second terminal through a wireless network, whereby the second terminal obtains and displays first multimedia data based on the first encoded data.

7. The wireless auxiliary stream device according to claim 6, wherein the sending module is specifically configured to:
send the first encoded data to a wireless network card, whereby the wireless network card sends the first encoded data to the second terminal through the wireless network, wherein
the wireless auxiliary stream device comprises the wireless network card.

8. The wireless auxiliary stream device according to claim 6, wherein the first encoded data received by the receiving module is obtained by encoding the to-be-processed multimedia data by the first terminal specifically comprises:
encoding the collected to-be-processed multimedia data based on a preset first interface of the first terminal to obtain the first encoded data, and calling the first network protocol to send the first encoded data to the wireless auxiliary stream device through the bulk endpoint, whereby the wireless auxiliary stream device receives the first encoded data.

9. The wireless auxiliary stream device according to claim 6, wherein the receiving module is further configured to:
receive, through the bulk endpoint based on the first network protocol, first debugging data sent by the first terminal, and perform a debugging operation based on the first debugging data, wherein
the first debugging data is obtained through parsing performed by the first terminal based on a first debugging signal.

10. A wireless auxiliary stream system, comprising a first terminal, a second terminal, and a wireless auxiliary stream device, wherein
the first terminal is connected to the wireless auxiliary stream device through a bulk endpoint, and the second terminal is connected to the wireless auxiliary stream device through a wireless network;
the wireless auxiliary stream device executes the method for transmitting wireless auxiliary stream data based on a bulk endpoint according to any one of claims 1 to 5;
the first terminal is configured to send first encoded data to the wireless auxiliary stream device; and
the second terminal is configured to obtain and display first multimedia data based on the first encoded data.
